# EUROPÄISCHE PATENTANMELDUNG

(11) **EP 0 695 507 A2**
(43) Veröffentlichungstag der Anmeldung: **07.02.1996**
(21) Anmeldenummer: 95250133.6
(22) Anmeldetag: 07.06.1995
(51) Int. Cl.: A23K 1/18

(54) **Hundefutterdressing**

(30) Priorität: 04.08.1994 DE 4428853
(71) Anmelder: Von Burgsdorff, Heike, D-24232 Dobersdorf (DE)
(72) Erfinder: Von Burgsdorff, Heike, D-24232 Dobersdorf (DE)
(74) Vertreter: Wablat, Wolfgang, Dr.Dr.

(57) **Zusammenfassung**

Die vorliegende Erfindung betrifft ein Hundefutterdressing, ein Verfahren zu seiner Herstellung sowie seine Verwendung zur geschmacklichen Verfeinerung von Hundefutter und sonstigen Nahrungsmitteln.

Das erfindungsgemäße Hundefutterdressing enthält 5 bis 20 Gew.-% Rohproteine, 2 bis 5 Gew.-% zuckerhaltige Nährstoffe, 3 bis 8 Gew.-% Speiseöle mit einem hohen Linolsäuregehalt, 0,5 bis 1,5 Gew.-% Geschmacksstoffe und/oder Aromen, 0,5 bis 8 Gew.-% Mineralstoffe und/oder Spurenelemente, 1000 bis 10000 IE Vitamin A pro kg Dressing, 100 bis 1000 IE Vitamin D₃ pro kg Dressing, 0,005 bis 0,2 Gew.-% weitere Vitamine, 0,1 bis 5 Gew.-% Konservierungsstoffe, 0,01 bis 0,05 Gew.-% Antioxidantien und 52,250 bis 88,885 Gew.-% Wasser.

## Beschreibung

Die vorliegende Erfindung betrifft ein Hundefutterdressing, ein Verfahren zu seiner Herstellung sowie seine Verwendung zur geschmacklichen Verfeinerung von Hundefutter und sonstigen Nahrungsmitteln.

Demgegenüber stehen handelsübliche Tierfuttersorten. Unter handelsüblichem Tierfutter wird im allgemeinen übliches Futter für vorwiegend fleischfressende Tiere, bevorzugt für Hunde und Katzen, verstanden. Insbesondere handelt es sich um handelsübliches Tierfutter auf pflanzlicher und/oder tierischer Basis, das in trockener oder halbfeuchter Form oder als Naßfutter, beispielsweise in Form einer Konserve, verwendet wird.

Die trockenen Futtermittel, wie z. B. Kügelchen oder Kuchen, sind im allgemeinen weniger gefragt als die halbfeuchten und feuchten, welche sich mehr der Form und dem Aussehen derjenigen Futtermittel nähern, die die natürliche Quelle eines Tierfutters bilden.

Die halbfeuchten Futtermittel sind an sich über Jahre haltbar. Vielfach sind sie aber nicht langzeitig haltbar, da sie in der Regel, um Kosten zu sparen, nur in Papierpackungen, Säcken oder ähnlichen Behältnissen mit mehr oder weniger guter Abdichtung verpackt sind.

Die feuchten Futtermittel sind die eigentlichen Konserven. Sie müssen sterilisiert, in dichten Behältnissen verpackt und bei ca. 125°C eine längere Zeit erhitzt werden. Die feuchten Futtermittel werden in der Regel als Kosthappen angeboten und bestehen aus mehlhaltigen Stoffen, Eingeweiden, Mineralsalzen, Gemüsen und Wasser. Diese Bestandteile sind in solchen Verhältnissen miteinander vermischt, daß dem Tier ein Futter zur Verfügung gestellt wird, das alle Nährbestandteile für ein richtiges Futter enthält. Diesen Futtermitteln können sonstige konzentrierte Nährstoffe zugeführt werden.

Der Nachteil dieses "vollwertigen" Tierfutters besteht in seinen sehr hohen Beschaffungskosten, was wiederum die Verbraucherbeliebtheit des Futters stark herabsetzt.

Aufgabe der Erfindung war es daher, ein Futterdressing zur Verfügung zu stellen, das sich sehr gut als Beimischung von Essensresten sowie billigen bzw. minderen Tierfuttersorten eignet, so daß der Tierhalter keine teuren Markenprodukte kaufen muß, um seinem Tier eine gesunde und schmackhafte Futterration zu verabreichen.

Gegenstand der Erfindung ist ein Hundefutterdressing, welches sich dadurch auszeichnet, daß es 5 bis 20 Gew.-% Rohproteine, 2 bis 5 Gew.-% zuckerhaltige Nährstoffe, 3 bis 8 Gew.-% Speiseöle mit einem hohen Linolsäuregehalt, 0,5 bis 1,5 Gew.-% Geschmacksstoffe und/oder Aromen, 0,5 bis 8 Gew.-% Mineralstoffe und/oder Spurenelemente, 1000 bis 10000 IE Vitamin A pro kg Dressing, 100 bis 1000 IE Vitamin D₃ pro kg Dressing, 0,005 bis 0,2 Gew.-% weitere Vitamine, 0,1 bis 5 Gew.-% Konservierungsstoffe, 0,01 bis 0,05 Gew.-% Antioxidantien und 52,250 bis 88,885 Gew.-% Wasser enthält.

Eine bevorzugte Ausführungsform des erfindungsgemäßen Hundefutterdressings enthält 11,75 Gew.-% Rohproteine, 4,34 Gew.-% zuckerhaltige Nährstoffe, 7,23 Gew.-% Speiseöle mit einem hohen Linolsäuregehalt, 0,72 Gew.-% Geschmacksstoffe und/oder Aromen, 1,636 Gew.-% Mineralstoffe und/oder Spurenelemente, 4400 IE Vitamin A pro kg Dressing, 350 IE Vitamin D₃ pro kg Dressing, 0,007 Gew.-% weitere Vitamine, 5 Gew.-% Konservierungsstoffe, 0,015 Gew.-% Antioxidantien und 69,302 Gew.-% Wasser.

Eine weitere bevorzugte Zusammensetzung des erfindungsgemäßen Hundefutterdressings enthält 11,75 Gew.-% Rohproteine, 4,34 Gew.-% zuckerhaltige Nährstoffe, 7,23 Gew.-% Speiseöle mit einem hohen Linolsäuregehalt, 0,72 Gew.-% Geschmacksstoffe und/oder Aromen, 5,34 Gew.-% Mineralstoffe und/oder Spurenelemente, 8800 IE Vitamin A pro kg Dressing, 700 IE Vitamin D₃ pro kg Dressing, 0,0107 Gew.-% weitere Vitamine, 5 Gew.-% Konservierungsstoffe, 0,015 Gew.-% Antioxidantien und 65,594 Gew.-% Wasser.

Die Rohproteine sind in Form von Mehlen und/oder Pulvern und/oder Schroten und/oder Flüssigkeiten enthalten. So werden zum Beispiel Fleisch- und Tierkörpermehle, Blutmehle, Blute, Fischmehle, Sojamehle, Magermilchpulver, Casein, Gelatinen, Eipulver, Nußmehle, Extrakte aus Maisquellwässern und Kartoffelkochwässern, Federmehle, Hornmehle, Knochenfuttermehle, Geflügelabfallmehle, Grieben, Fleischknochenmehle, Futterknochenschrote, Tierlebermehle, Fischlebermehle, Süß- und Sauermolkenpulver, getoastete Extraktionsschrote von Ölfrüchten, Mehle von proteinreichen Hülsenfrüchten wie Erbsen, Bohnen, Linsen etc., mikrobielle Biomassen aus Saccharomyces cerevisiae und Candida utilis als Trockenpulver, Brautrebermehle und Fischkonzentrate eingesetzt.

Eine bevorzugte Zusammensetzung des erfindungsgemäßen Hundefutterdressings enthält als Rohproteine Gelatine, Fleischgriebenmehl und Blutmehl.

Als zuckerhaltige Nährstoffe werden Sirupe und/oder andere halbflüssige wasserlösliche Hexosen bzw. Disaccharide aus Hexosen ohne oder mit geringem Galactoseanteil und/oder Roh- und Speisezucker eingesetzt. Vor allem finden z. B. Rüben- und Rohrzuckersirupe, Melassen, Malzsirupe, Malzextrakte, Kräutersirupe wie Fenchelsirup, Fruchtsirupe aus Fruchtsäften, Sirupe aus zuckerhaltigen Pflanzen wie Ahorn- und Dattelsirupe, Stärkesirupprodukte der hydrolytischen Spaltung von Stärken, Bienenhonige, Kunsthonige, Marmeladen und Fruchtmuse, Konfitüren, Gelees, Ablaufsirupe bei der Zuckergewinnung sowie Flüssigzucker durch Auflösen von Mono- und Disacchariden in Wasser Verwendung.

Die Futterakzeptanz wird erheblich gefördert durch die ausgewogenen Zusätze von Saccharose (Rübensirup etc.) in Verbindung mit Natriumnonophosphat, Kaliumchlorid und Glutamin. Der in den erfindungsgemäßen Dressings gegebene hohe Wassergehalt potenziert die Akzeptanzwirkung der genannten Stoffe.

Die erfindungsgemäß eingesetzten Speiseöle weisen einen hohen Gehalt an essentiellen ungesättigten Fettsäuren und geringe Anteile an langkettigen und mittelkettigen gesättigten Fettsäuren auf. Der Linolsäuregehalt der Speiseöle liegt zwischen 3 bis 6 Gew.-%.

Als Speiseöle werden insbesondere Öle aus Pflanzensamen oder Ölfrüchten wie Lein-, Raps-, Sonnenblumen-, Baumwollsamen-, Reiskleie-, Mais-, Sesam-, Aprikosenkern-, Oliven- oder Nußöle sowie auch tierische Öle oder halbfeste Fette wie Fischöle, Leberöle, Waltrane, Gänse-, Enten- und Schweineschmalz eingesetzt.

Tiere, insbesondere Haustiere, bevorzugen bestimmte Nahrungsmittel. Das Aroma spielt hierbei eine ausschlaggebende Rolle. Aus diesem Grunde kommt der Aromatisierung von Tierfutter eine besondere Bedeutung zu.

Die im erfindungsgemäßen Hundefutterdressing eingesetzten Geschmacksstoffe und/oder Aromen, die die Futterakzeptanz des Hundes betonen, enthalten Glutaminsäure. Als Aromen werden vor allem pulverförmige, flüssigölige oder pastöse handelsübliche Tierfutteraromen und als Geschmacksstoffe dickflüssige Fleischfonds und Brühsuppenkonzentrate mit Geschmacksnoten wie beispielsweise Hamspice, Geflügel, Lamm, Kaninchen, Fisch wie Lachs, Hering usw. und Fleisch wie Wild, Innereien, Rind usw. eingesetzt.

Die erfindungsgemäß eingesetzten Mineralstoffe und/oder Spurenelemente sind in Form löslicher und/oder unlöslicher Salze im Hundefutterdressing enthalten. Die Mengen der einzelnen Bestandteile sind abhängig von den physiologischen Erfordernissen. So besteht ein enger Zusammenhang zwischen dem Tagesbedarf an Rohprotein/kg Hund und den benötigten Mengen an Mineralstoffen und/oder Spurenelementen. Diese physiologische Beziehung ist bei der Zusammensetzung des Hundefutterdressings bereits berücksichtigt. Erfindungsgemäß enthalten die Dressings 0,5 bis 8 Gew.-% anorganische Salze, einzeln zugesetzt, als vorgefertigte Spezialmischungen oder als Mischungen von Mineralsalzen, Spurenelementen und Vitaminen in Form sogenannter "Praemixe".

Die Zudosierung der Salze ist auch vom natürlichen Gehalt derselben in den Nährstoffen, hauptsächlich in den Rohproteinquellen, abhängig. Werden z. B. Fleisch- und Blutmehle als Rohproteinquellen verwendet, ist ein Zusatz von beispielsweise Fe-Salzen nicht erforderlich. Beim Einsatz anderer Rohproteinquellen ist dagegen ein Zusatz von Fe-Salzen notwendig.

Durch den Gehalt an Gelatine und Linolsäure stellt das erfindungsgemäße Hundefutterdressing eine Prohylaxe gegen vorzeitige Verschleißerscheinungen des Stütz- und Bandapparates (Knochen, Gelenke, Sehnen) des Hundes dar. Ferner wird das Wachstum der Klauen und des Haarkleides positiv beeinflußt, die Tiere bekommen ein glänzendes Fell.

Folgende Mineralstoffe und/oder Spurenelemente werden in Form ihrer vorgenannten Salze verwendet: Ca als CaCO₃, P als NaH₂PO₄·2H₂O, Mg als MgO, K als KCl, Na als NaCl, Fe als FeSO₄·7H₂O, Cu als CuSO₄·5H₂O, Zn als ZnCl₂, Mn als MnSO₄·5H₂O, J als KJ, F als CaF₂, Se als Na₂SeO₄, Co als CoSO₄·7H₂O, V als Na₃VO₄, Mo als Na₂MoO₄, Cr als K₂Cr₂O₇, Ni als NiSO₄·7H₂O, Pb als PbSO₄, As als Na₃AsO₄ sowie Si als Na₂SiO₃.

Das Fluor führt zu einer verbesserten Zahn- und Knochenbildung und wirkt prophylaktisch gegen Karies. Das Molybdän als Spurenelement ist in lebenswichtigen Enzymen enthalten, die für Stoffwechselfunktionen unerläßlich sind (Xanthinoxidase). Gleiches gilt für das Vanadin (Lipidstoffwechsel), das Nickel (Bildung der Glycerin-3-phosphat-dehydrogenase) und das Chrom (Verbesserung der Glucosetoleranz). Das Silizium verbessert die Bildung der Knorpelstruktur und des Bindegewebes, während Arsen und Blei das Wachstum und die Blutbildung fördern.

Das erfindungsgemäße Hundefutterdressing enthält Vitamine, die teils in den einzelnen Nährkomponenten vorhanden sind, teils zum Ausgleich der physiologisch erforderlichen Mengen durch Zusätze in Form von Einzelvitaminen, Vitaminmischungen oder Mischungen aus Mineralstoffen, Spurenelementen und Vitaminen zudosiert werden müssen. Auch hier besteht ein enger Zusammenhang zwischen dem Tagesbedarf an Rohprotein/kg Hund und den benötigten Mengen an Vitaminen, so daß diese physiologische Beziehung bei der Zusammensetzung des Dressings bereits berücksichtigt ist.

Erfindungsgemäß kommen die Vitamine A, D₃, E, B₁, B₂, B₆, B₁₂, Biotin, Nicotinsäure, Panthothensäure sowie Folsäure zum Einsatz.

Als Konservierungsstoffe werden nur die gesetzlich zulässigen Produkte wie Na₂SO₃, Na₂S₂O₅, NaNO₂,Propionsäure und deren Alkalisalze, Sorbinsäure und deren Alkalisalze, Fumorsäure, Essigsäure, Milchsäure, Zitronensäure, Weinsäure, Formaldehyd sowie 1,2-Propandiol eingesetzt.

Als Antioxidantien kommen Gallate, Ascorbinsäure, Butylhydroxianisol und/oder Butylhydroxitoluol in Frage. Wasser kann als Leitungswasser und/oder Brunnenwasser und/oder demineralisiertes Wasser eingesetzt werden.

Gegenstand der Erfindung ist ferner ein Verfahren zur Herstellung des vorab beschriebenen Hundefutterdressings. Dieses erfindungsgemäße Verfahren zeichnet sich dadurch aus, daß man die erforderlichen Gewichtsmengen von Rohproteinen, zuckerhaltigen Nährstoffen, Speiseölen mit einem hohen Linolsäuregehalt, Geschmacksstoffen und/oder Aromen sowie Mineralstoffen und/oder Spurenelementen in der mit 1 bis 2 %igem Überschuß erforderlichen Gewichtsmenge Wasser löst bzw. suspendiert, danach die Mischung bei einer Temperatur zwischen 120 bis 130°C 20 bis 30 Minuten sterilisiert, anschließend auf 50°C abkühlt, die in dem Konservierungsstoff suspendierten und/oder gelösten Vitamine und Antioxidantien hinzumischt und das so erhaltene Dressing in verschließbare Behälter, die vorher nach bekannten Methoden sterilisiert wurden, einfüllt.

Als verschließbare Behälter werden Gläser, Büchsen, Plastikflaschen und/oder Tuben eingesetzt.

Die erfindungsgemäße Herstellung der Dressings ist gegenüber anderen, bekannten Futtermitteln ökonomisch günstiger durch den Einsatz billiger Rohstoffe.

Ein weiterer Gegenstand der Erfindung ist die Verwendung des vorab beschriebenen Hundefutterdressings zur geschmacklichen Verfeinerung von Hundefutter und sonstigen Nahrungsmitteln. Die Dressings sind bei Raumtemperatur viskos-halbflüssig und können in dieser Form anderen ballaststoffreichen Nahrungsmitteln wie Speiseresten, Gemüsen, Kartoffeln, Cerealien und Cerealienprodukten usw. entsprechend dem Alter, dem Gewicht und den Lebensumständen des Tieres gezielt zudosiert werden. Das dosierte Dressing wird auf das Tierfutter geschüttet und untergemischt.

Nach Öffnen der Behälter sind die Dressings kühl zu lagern. Der Einsatz des Hundefutterdressings ist vom Gehalt an Rohprotein abhängig. Die Dosierung des Hundefutterdressings mittels Drehverschlußkappe oder Dosierlöffel ist so zu wählen, daß ca. 3 g Rohprotein/kg Hund/Tag verfüttert werden.

Das erfindungsgemäße Hundefutterdressing kann dem Tierfutter auch in konzentrierter Form zugemischt werden.

In den folgenden Tabellen ist der Proteinbedarf des Hundes in den einzelnen Lebensphasen aufgeführt.

**Tabelle 1**

| Adulter Hund (zur Erhaltung) | |
|---|---|
| Lebendmasse des Hundes kg | Rohprotein g |
| 5 | 17 |
| 10 | 28 |
| 20 | 47 |
| 35 | 72 |
| 60 | 108 |

**Tabelle 2**

| Gravidität und Laktation | | |
|---|---|---|
| Lebendmasse des Hundes kg | Gravidität Rohprotein g | Laktation Rohprotein g |
| 5 | 25 | 50 |
| 10 | 40 | 95 |
| 20 | 75 | 180 |
| 35 | 115 | 310 |
| 60 | 185 | 510 |

Die Nutrifizierung der Welpen mit Rohprotein richtet sich nach dem zu erwartenden Lebendgewicht der ausgewachsenen Tiere.

**Tabelle 3**

| Lebendmasse des Hundes ausgewachsen kg | 3. und 4. Monat Rohprotein g | 5. und 6. Monat Rohprotein g | 7. bis 12. Monat Rohprotein g |
|---|---|---|---|
| 5 | 18 | 19 | 17 |
| 10 | 29 | 32 | 30 |
| 20 | 48 | 49 | 50 |
| 35 | 70 | 85 | 80 |
| 60 | 100 | 140 | 120 |

Die Erfindung wird an den folgenden Beispielen näher erläutert.

### Beispiel 1

Zusammensetzung für ein Hundefutterdressing in g Bestandteile/kg Dressing

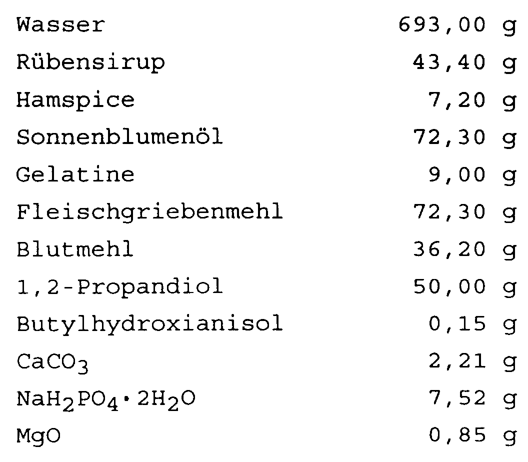

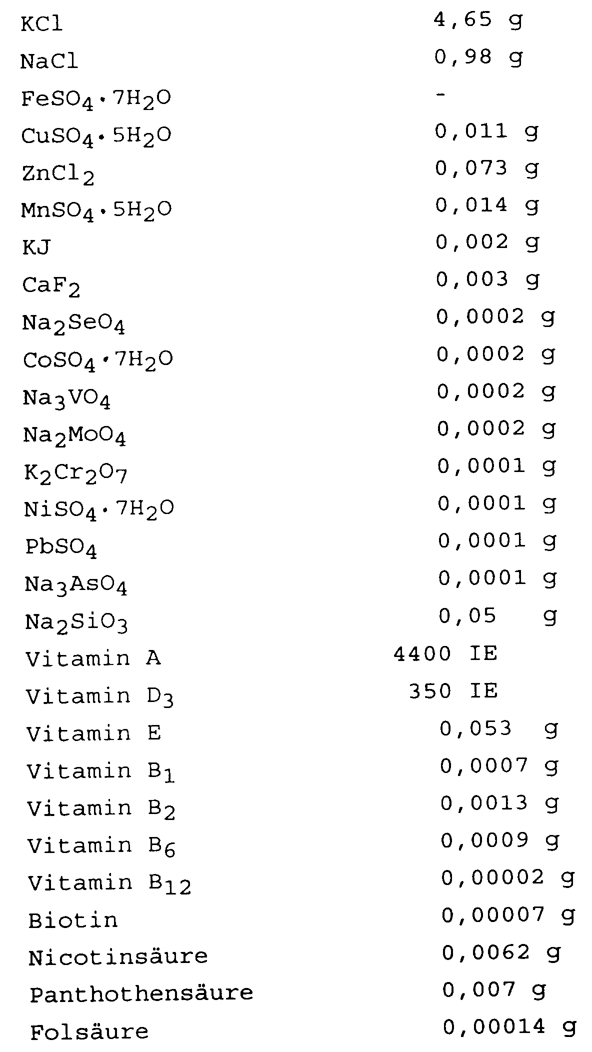

### Beispiel 2

Zusammensetzung für ein Hundefutterdressing in g Bestandteile/kg Dressing für einen Welpen im mittleren Jugendalter (5. bis 6. Monat)

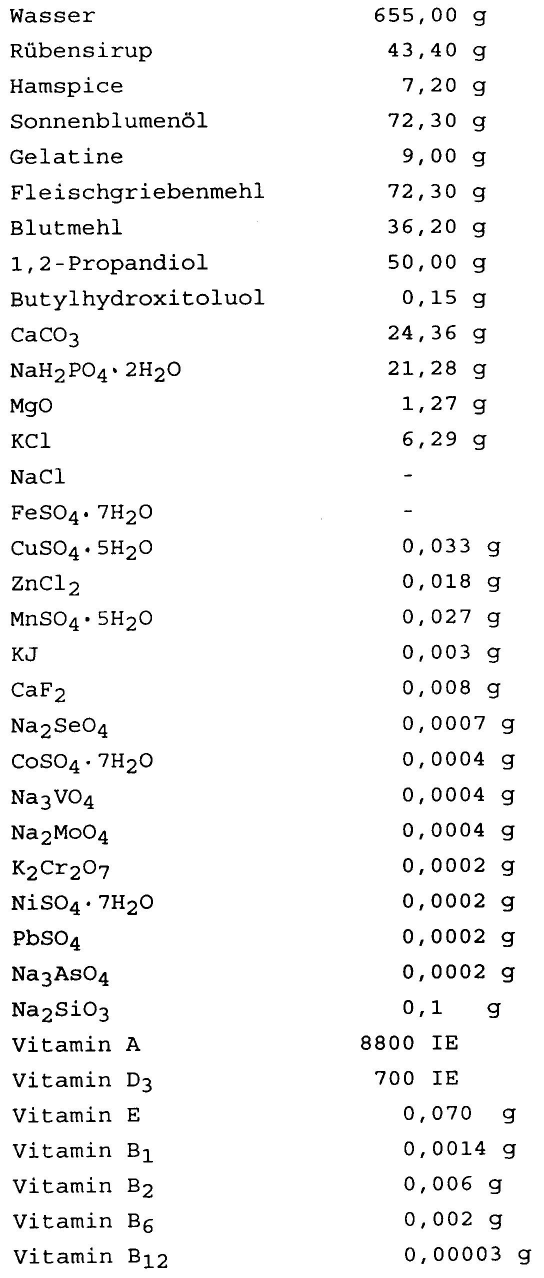

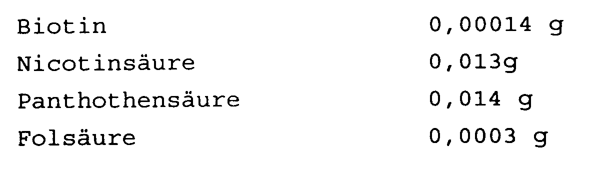

### Beispiel 3

### Herstellung eines Hundefutterdressings

Folgende Ingredienzen werden nacheinander eingewogen und in 706,9 g Wasser eingetragen:
43,4 g Rübensirup
7,2 g Hamspice
72,3 g Sonnenblumenöl
9,0 g Gelatine
72,3 g Fleischgriebenmehl
36,2 g Blutmehl
2,21 g CaCO₃
7,52 g NaH₂PO₄·2H₂O
0,85 g MgO
4,65 g KCl
0,98 g NaCl
0,011 g CuSO4·5H₂O
0,073 g ZnCl₂
0,014 g MnSO₄·5H₂O
0,002g KJ
0,003 g CaF₂
0,0002 g Na₂SeO₄
0,0002 g CoSO₄·7H₂O
0,0002 g Na₃VO₄
0,0002 g Na₂MoO₄
0.0001 g K₂Cr₂O₇
0,0001 g NiSO₄·7H₂O
0,0001 g PbSO₄
0,0001 g Na₃AsO₄
0,05 g Na₂SiO₃

Die erhaltene Mischung wird 20 Minuten bei einer Temperatur von 121°C im Dampfsterilisator erhitzt. Man läßt auf 50°C erkalten und versetzt unter Rühren mit einer Mischung der nachstehenden Komponenten:
50,0 g 1,2-Propandiol
0,15 g Butylhydroxitoluol
4400 IE Vitamin A
350 IE Vitamin D₃
0,053 g Vitamin E
0,0007 g Vitamin B₁
0,0013 g Vitamin B₂
0,0009 g Vitamin B₆
0,00002 g Vitamin B₁₂
0,00007 g Biotin
0,0062 g Nicotinsäure
0,007 g Panthothensäure
0,00014 g Folsäure
Die fertige Mischung des Hundefutterdressings wird in vorher bei 121°C sterilisierte Schraubgläser eingefüllt, die zu verschließen sind. Vor der Zugabe der Dressings zu ballaststoffreichen Nahrungsmitteln sind die Gläserinhalte vom Verbraucher zu schütteln.

### Beispiel 4

Anwendung des Hundefutterdressings als Beifutterzusatz zu vollwertigem Hundefutter. Das dosierte Dressing wird auf das Hundefutter geschüttet und untergemischt.

### Beispiel 5

Anwendung des Hundefutterdressings als Beifutterzusatz zu Speiseresten. Das dosierte Dressing wird auf die Speisereste geschüttet und untergemischt.

### Beispiel 6

Fütterung verschiedener Hunde

| Hunderasse | Gewicht kg | Rohproteinbedarf/Tag g | Bedarf an Dressing/Tag bei 10% Rohprotein g |
|---|---|---|---|
| Dackel | 8 bis 10 | 27 bis 30 | 270 bis 300 |
| Beagle | 15 | 35 bis 40 | 350 bis 400 |
| Golden retriever | 25 | 50 bis 60 | 500 bis 600 |

### Beispiel 7

Das Hundefutterdressing wird in höherer Konzentration auf die Speisereste oder das Hundefutter geschüttet und untergemischt.

## Patentansprüche

1. Hundefutterdressing, dadurch gekennzeichnet, daß es 5 bis 20 Gew.-% Rohproteine, 2 bis 5 Gew.-% zuckerhaltige Nährstoffe, 3 bis 8 Gew.-% Speiseöle mit einem hohen Linolsäuregehalt, 0,5 bis 1,5 Gew.-% Geschmacksstoffe und/oder Aromen, 0,5 bis 8 Gew.-% Mineralstoffe und/oder Spurenelemente, 1000 bis 10000 IE Vitamin A pro kg Dressing, 100 bis 1000 IE Vitamin D₃ pro kg Dressing, 0,005 bis 0,2 Gew.-% weitere Vitamine, 0,1 bis 5 Gew.-% Konservierungsstoffe, 0,01 bis 0,05 Gew.-% Antioxidantien und 52,250 bis 88,885 Gew.-% Wasser enthält.

2. Hundefutterdressing nach Anspruch 1, dadurch gekennzeichnet, daß es 11,75 Gew.-% Rohproteine, 4,34 Gew.-% zuckerhaltige Nährstoffe, 7,23 Gew.-% Speiseöle mit einem hohen Linolsäuregehalt, 0,72 Gew.-% Geschmackstoffe und/oder Aromen, 1,636 Gew.-% Mineralstoffe und/oder Spurenelemente, 4400 IE Vitamin A pro kg Dressing, 350 IE Vitamin D₃ pro kg Dressing, 0,007 Gew.-% weitere Vitamine, 5 Gew.-% Konservierungsstoffe, 0,015 Gew.-% Antioxidantien und 69,302 Gew.-% Wasser enthält.

3. Hundefutterdressing nach Anspruch 1, dadurch gekennzeichnet, daß es 11,75 Gew.-% Rohproteine, 4,34 Gew.-% zuckerhaltige Nährstoffe, 7,23 Gew.-% Speiseöle mit einem hohen Linolsäuregehalt, 0,72 Gew.-% Geschmackstoffe und/oder Aromen, 5,34 Gew.-% Mineralstoffe und/oder Spurenelemente, 8800 IE Vitamin A pro kg Dressing, 700 IE Vitamin D₃ pro kg Dressing, 0,0107 Gew.-% weitere Vitamine, 5 Gew.-% Konservierungsstoffe, 0,015 Gew.-% Antioxidantien und 65,594 Gew.-% Wasser enthält.

4. Hundefutterdressing nach mindestens einem der Ansprüche 1 bis 3, dadurch gekennzeichnet, daß es die Rohproteine in Form von Mehlen und/oder Pulvern und/oder Schroten und/oder Flüssigkeiten enthält.

5. Hundefutterdressing nach Anspruch 4, dadurch gekennzeichnet, daß es als Rohrproteine Gelatine, Fleischgriebenmehl und Blutmehl enthält.

6. Hundefutterdressing nach mindestens einem der Ansprüche 1 bis 3, dadurch gekennzeichnet, daß es als zuckerhaltige Nährstoffe Sirupe und/oder andere halbflüssige wasserlösliche Hexosen bzw. Disaccharide aus Hexosen ohne oder mit geringem Galactoseanteil und/oder Roh- und Speisezucker enthält.

7. Hundefutterdressing nach Anspruch 6, dadurch gekennzeichnet, daß es als zuckerhaltigen Nährstoff Rübensirup enthält.

8. Hundefutterdressing nach mindestens einem der Ansprüche 1 bis 3, dadurch gekennzeichnet, daß die Speiseöle einen hohen Gehalt an essentiellen, ungesättigten Fettsäuren und geringe Anteile an langkettigen und mittelkettigen gesättigten Fettsäuren aufweisen.

9. Hundefutterdressing nach Anspruch 8, dadurch gekennzeichnet, daß es als Speiseöl Sonnenblumenöl enthält.

10. Hundefutterdressing nach mindestens einem der Ansprüche 1 bis 3, dadurch gekennzeichnet, daß die Geschmacksstoffe und/oder Aromen Glutaminsäure enthalten.

11. Hundefutterdressing nach Anspruch 10, dadurch gekennzeichnet, daß es als Geschmacksstoff ein dickflüssiges Brühsuppenkonzentrat mit der Geschmacksnote Hamspice enthält.

12. Hundefutterdressing nach mindestens einem der Ansprüche 1 bis 3, dadurch gekennzeichnet, daß es die Mineralstoffe und/oder Spurenelemente in Form löslicher und/oder unlöslicher Salze entält.

13. Hundefutterdressing nach Anspruch 12, dadurch gekennzeichnet, daß es als Mineralstoffe und/oder Spurenelemente Ca, P, Mg, K, Na, Fe, Cu, Zn, Mn, J, F, Se, Co, V, Mo, Cr, Ni, Pb, As und Si enthält.

14. Hundefutterdressing nach mindestens einem der Ansprüche 1 bis 3, dadurch gekennzeichnet, daß es die Vitamine A, D₃, E, B₁, B₂, B₆, B₁₂, Biotin Nicotinsäure, Panthothensäure und Folsäure enthält.

15. Hundefutterdressing nach mindestens einem der Ansprüche 1 bis 3, dadurch gekennzeichnet, daß es als Konservierungsstoff 1,2-Propandiol enthält.

16. Hundefutterdressing nach mindestens einem der Ansprüche 1 bis 3, dadurch gekennzeichnet, daß es als Antioxidantien Butylhydroxianisol und/oder Butylhydroxitoluol enthält.

17. Hundefutterdressing nach mindestens einem der Ansprüche 1 bis 3, dadurch gekennzeichnet, daß es als Wasser Leitungswasser und/oder Brunnenwasser und/oder demineralisiertes Wasser enthält.

18. Verfahren zur Herstellung eines Hundefutterdressings gemäß Anspruch 1, dadurch gekennzeichnet, daß man die erforderlichen Gewichtsmengen von Rohproteinen, zuckerhaltigen Nährstoffen, Speiseölen mit einem hohen Linolsäuregehalt, Geschmackstoffen und/oder Aromen sowie Mineralstoffen und/oder Spurenelementen in der mit 1 bis 2 %igem Überschuß erforderlichen Gewichtsmenge Wasser löst bzw. suspendiert, danach die Mischung bei einer Temperatur zwischen 120 bis 130°C 20 bis 25 Minuten sterilisiert, anschließend auf 50°C abkühlt, die in dem Konservierungsstoff suspendierten und/oder gelösten Vitamine und Antioxidantien hinzumischt und das so erhaltene Dressing in verschließbare Behälter, die vorher nach bekannten Methoden sterilisiert wurden, einfüllt.

19. Verwendung des Hundefutterdressings zur geschmacklichen Verfeinerung von Hundefutter und sonstigen Nahrungsmitteln.
